# EUROPEAN PATENT SPECIFICATION

(11) **EP 4 493 860 B1**
(45) Date of publication and mention of the grant of the patent: **06.05.2026**
(21) Application number: 23709980.9
(22) Date of filing: 07.03.2023
(51) Int. Cl.: F24H 1/18, F24H 9/02, F24F 13/22, F24H 4/02, F24H 9/06, F24H 9/16, F24H 4/04, B29K 105/04

(54) **CAP ELEMENT WITH CENTERING MECHANISM**
KAPPENELEMENT MIT ZENTRIERMECHANISMUS
ÉLÉMENT DE CAPUCHON AVEC MÉCANISME DE CENTRAGE

(30) Priority: 14.03.2022 EP 22161873; 21.03.2022 EP 22163167; 21.03.2022 EP 22163164; 01.04.2022 EP 22166330; 01.04.2022 EP 22166331; 01.04.2022 EP 22166332; 06.12.2022 EP 22211748
(43) Date of publication of application: 22.01.2025
(73) Proprietor: BDR Thermea Group B.V., 7332 BD Apeldoorn (NL)
(72) Inventor: KIEFFER, Damien, 7332 BD Apeldoorn (NL); CHASSAGNARD, Benjamin, 7332 BD Apeldoorn (NL); ANTOINE, Florian, 7332 BD Apeldoorn (NL)
(74) Representative: Grabovac, Dalibor
(86) International application number: PCT/EP2023/055640
(87) International publication number: WO 2023/174739

(56) References cited:
- EP-A1- 3 462 103
- EP-A2- 2 110 619
- DE-B- 1 299 832
- DE-U- 1 934 770
- DE-U1- 9 419 611

## Description

The invention relates to a cap element for a heating device and to a heating device system comprising said cap element. Also, the invention relates to a use of said cap element with a heating device, in particular a heat pump water heater. Additionally, the invention relates to a heating device system.

A heating device like a heat pump is a device able to warm a closed space of a building or to warm domestic hot water by transferring thermal energy from a source to another. An air-source heat pump water heater is a device using the heat pump technology to use energy from air to heat the domestic water contained in a tank.

A hot water tank for the production of hot water for heating or domestic hot water is composed of two main elements: a tank and a thermal insulation. The thermal insulation is usually achieved by one of two means: the installation of parts around the tank (adhesive foam parts, adhesive insulation etc.) or the injection of insulating foam into an outer casing. Insulating foam injection is achieved by injecting chemical components that react together via a chemical reaction. This chemical reaction causes the solid produced to expand to such an extent that the volume of foam obtained is much greater than the volume of the components injected separately.

The injection process is a complex one and many factors create variability in the volume required and the volume injected, i.e., tank geometry tolerance, casing geometry tolerance, ambient air temperature, temperature of the chemical components of the insulation, concentration of the components, nature of the components, precision of the injection machine, temperature of the tank, surface condition of the tubes, etc.

Among these elements, the tolerance of tank height and casing height are major elements. Indeed, a difference of a few millimeters on one of these heights can lead to a lack of insulation, leaks in the insulation, lifting of the tank or aesthetic defects. Also, it is noted that during the foaming process, the pressure is not exerted evenly all around the tank. This requires to center it on its external circumference in order to maintain the verticality.

To solve these problems, it is possible to provide a large clearance and allow the tank to rise several millimeters during foam expansion. This can lead to a lack of insulation foam at the bottom and can cause the tank to be out of alignment with the vertical, thereby impacting on a reduction of the thermal performance of the product.

According to another solution, it is possible to install additional fittings prior to insulation injection by checking the most suitable fitting for each product. This solution requires a control of each product, reduces the standardization of the process and requires a technical analysis for each product. Also, this solution contributes to the risk of a forgotten additional part, resulting in an unusable product due to an insulation foam leakage.

In addition, it is possible to add a foam that deforms in compression to compensate tolerance fluctuations. However, if the foam does not deform very much, there is a risk of leakage of the insulation foam during injection. Also, in the case where the foam is strongly compressed, there is a risk of deformation or breakage of the parts on which it lies on.

DE9419611U1 describes an arrangement in which the central position of a water tank is bolstered within a casing by the use of centering elements positioned at the rim of an upper edge of the tank. The centering elements may be positioned discretely and radially, or may be provided as a circular rim construction, and maintain the position of the central water tank during filling of the casing with thermal insulation.

DE1934770U also describes a system in which a tank is bolstered within a casing by the use of bolstering elements, in this case four radially positioned cams created as extensions of a tank cover.

DE1299832B describes a water tank, reinforced at its base, and which is easily closed with a self-retaining plastic lid comprising a flange-like formed outer structure which interacts with a circular bead with hook-shaped cross-section at the outer rim of the upper edges of the tank opening.

EP2110619A2 describes a body with water storage space provided with a lid comprising locking pieces positioned at its outer rim and which interact with a rim on the upper opening rim of the body with water storage space.

EP3462103A1 describes a hot water supply unit with a heating construction situated on top of a water tank with thermal insulation and with a support plate positioned between the tank and the heater. The support plate includes an outer section with recess arranged to interact with a circular protrusion situated along the outer rim of the thermal insulation arranged around the water tank.

None of these solutions give full satisfaction.

It is therefore desirable to obtain a way to efficiently thermally isolate the water tank with foam injection taking into account possible tolerance fluctuations of the tank and casing height.

The object is solved by a cap element for a heating device, the heating device including a water tank located in a casing, wherein the cap element is placeable on or in the casing for closing said casing, the cap element comprising:
a centering mechanism integrated in, or removable from, the cap element, the centering mechanism having a deformable structure for causing the cap element to be centered relative to the water tank upon exerting a mechanical pressure on said deformable structure and wherein the deformable structure (6) is located at a central portion of the cap element.

The possibility of removing the centering mechanism from the cap element leads to the possible advantage of replacing the centering mechanism in case of malfunctioning or damage.

The cap element can be a top element of the casing or can be any other closing element located for example at the base or at the side of the casing. In particular, the cap element can be the aesthetic top cap of a product or the base of other components, in particular the base of an heat pump in the case of a heat pump water heater.

It is noted that the mechanical pressure can be exerted on the cap element in response to the generation of an insulating material produced in a space between the water tank and the casing. As a matter of fact, the generation of insulating material inside the space can cause a mechanical stress acting on the cap element, and in particular on the centering mechanism, from below. The insulating material expands during the injection process and generates a mechanical stress in all directions, including towards the vertical, from the bottom to the top. In order to prevent the cap element from escaping due to the stress of the insulating material, a mechanical pressure can be applied to the upper surface of the cap element at the beginning of the injection process. This mechanical pressure is greater than the mechanical stress exerted by the insulating material during its chemical reaction and will be in the opposite direction. This is the mechanical pressure that is exerted on the deformable structure and causes the deformation of said structure, thereby centering the cap element. In reality, the pressure exerted on the deformable structure can be considered as the resultant force between the mechanical pressure exerted on the cap elment and the mechanical stress generated by the insulating material.

Advantageously, the centering mechanism in the cap element makes it possible to at least partially compensate for height differences in the tank or casing and thus reduce the associated defects.

In other words, the presence of the centering mechanism guarantees the correct centering of the tank on the upper part and avoids any misalignment phenomena during the injection process. Furthermore, it makes the assembly of the product functional and compatible with different tank and casing heights. The compatible tolerance range depends on the geometry of the deformable surfaces and the ability of the material to deform without breaking.

The centering mechanism can be advantageously integrated into molded parts, particularly for injected or expanded parts of the cap element. The dimensions are compatible with the injection molding tools.

According to an example, the deformable structure can be arranged in a cavity of the cap element. Also, the deformable structure can be attachable to the cap element. In particular, the deformable structure can be directly or indirectly attached to a portion of the cap element. The possibility of attaching to, and therefore detaching from, the cap element leads to the possible advantage of applying the deformable structure (and also the centering mechanism) on a standard cap element for a heating device.

In another example, the deformable structure comprises a plurality of protruding portions moving away from each other when subjected to the mechanical pressure. In particular, these portions move away when stressed so that the cap element can penetrate further into the casing and thus regain its nominal position, independent of the tank and casing tolerances.

In one example, the protruding portions are arranged equidistant from each other. Also, the protruding portions can have each an external surface and tapered internal edge surfaces. The external surface can be flat, curve, polygonal, or having any suitable configuration. This particular configuration facilitates the moving away of the protruding portions from each other when a pressure is present. Also, the tapered internal edge surfaces can facilitate and guide the contact with the upper portion of the water tank. The tapered internal edge can be conical, partly conical or have a chamfer.

In a further example, the deformable structure is located at a central portion of the cap element. The location at the central part of the cap element facilitates the centering of the cap element relative to the water tank and the casing. Alternatively, the deformable structure is not located at a central part of the cap element. For example, the deformable structure can be made of several, in particular three or more, deformable parts which are close from the near the periphery of the casing.

In an additional example, the deformable structure is made of expanded plastic, in particular expanded polystyrene or expanded polypropylene. It is clear that any deformable material suitable for the purpose of the present invention can be used.

In one example, the deformable structure is configured to be in contact with an upper portion of the water tank. This guarantees a correct alignment of the cap element relative to the water tank and the casing. In particular, the deformable structure can be configured to surround a protruding element of the water tank, in particular a tube or a pin. In this way, a more stable contact between the cap element and the water tank can be obtained.

In another example, the deformable structure is radially deformable in response to the mechanical pressure. This is the case when the deformable structure has a geometry of revolution (i.e. cylindrical). Alternatively, the deformable structure is laterally deformable in response to the mechanical pressure. This is the case when the deformable structure does not have a geometry of revolution.

In a further another example, the deformable structure is deformable in compression in response to the mechanical pressure. This provide additional flexibility to the deformable structure in order to better compensate the misalignment phenomena during the injection process. Also, the deformable structure can be deformable on the water tank's side or is deformable on a side different to the water tank's side. As a matter of fact, the centering mechanism can be applied on the cap element on a surface different from the surface facing the water tank provided that the deformable structure causes a realignment of the water tank during the injection process, for example based on an indirect mechanical pressure exerted on it.

In one example, the deformable structure comprises at least a recess. The recess can be used to receive a protruding element of the water tank, in particular a tube or a pin. Advantageously, the recess is formed by the protruding portions suitably arranged along a closed outline. The outline can be circular or polygonal. In particular, between two consecutive protruding portions there is a space in order to allow the free deformation of each protruding portion independently from the deformation of a neighboring protruding portion. It is noted that the insulating material can reach also the recess in order to have insulation foam everywhere (this is extremely important because it's the top of the tank, where the water is the hotter). In particular, the recess can be filed with the insulating material. This limits the heat dissipation due to the protruding portion and improves the thermal performance of the tank.

In additional examples, the deformable structure can have a circular cross-section or, alternatively, can have a polygonal cross-section. For example, the deformable structure can have a cylindrical structure or a cube-shaped structure.

In another aspect of the invention, a heating device system is provided. The heating device system comprising:
a heating device, in particular a heat pump water heater; and
an inventive cap element,
wherein the heating device comprises a casing and a water tank located in the casing, and wherein the cap element is placeable on or in the casing and closing said casing, the cap element being in particular a support for a heat pump,
wherein the cap element comprises a centering mechanism integrated in, or removable from, the cap element, the centering mechanism having a deformable structure for causing the cap element to be centered relative to the water tank upon exerting a mechanical pressure on said deformable structure wherein the deformable structure is located at a central portion of the cap element.

In one example, the heating device further comprises an insulating material arranged in a space between the water tank and the casing, the insulating material causing a direct or indirect mechanical stress on the deformable structure.

In a further example, the mechanical pressure can be exerted on the cap element in response to the generation of an insulating material produced in a space between the water tank and the casing. In addition, the mechanical pressure can exerted on the cap element on the opposite direction to a mechanical stress exerted on the cap element by the insulating material. In particular, the mechanical pressure exerted on the cap element is greater than a mechanical stress exerted on the cap element by the insulating material. This prevents the cap element from escaping due to the mechanical stress generated by the insulating material inside the casing.

In a further aspect of the invention, a use of the inventive cap element is provided. The inventive cap element is used with a heating device, in particular a heat pump water heater.

According to an aspect of the invention a heating system is provided wherein the heating system comprises:
a heating device, in particular a heat pump water heater, wherein the heating device comprises a casing and a water tank located in the casing, and
a cap element that is placeable on or in the casing and closing said casing, the cap element being in particular a support for a heat pump,
and
wherein the water tank comprises a centering mechanism which has a deformable structure for causing the cap element to be centered relative to the water tank upon exerting a mechanical pressure on said deformable structure and wherein the deformable structure is located at a central portion of the cap element.

By provision of a water tank with the centering mechanism the same advantages can be achieved like by providing the cap element with the centering mechanism.

The water tank can comprise a centering part. The centering part can be a tube that is fixedly connected to a water tank wall. For example, the centering part can be welded to the water tank well. The centering mechanism can be mounted on the centering part. In particular, it can be mounted such that the centering mechanism is releasable connected to the centering part.

The centering mechanism can comprise several protruding portions. The protruding portions can be in contact with a water tank wall.

The cap element can comprise a recess for receiving the centering mechanism. In particular, the centering mechanism enters the recess when a force is exerted to the cap element. The force exerted on the cap element is greater than the force resulting by the insulating material during its chemical reaction.

In the figures, the subject-matter of the invention is schematically shown, wherein identical or similarly acting elements are usually provided with the same reference signs.
- Figures 1A-B: show a schematic representation of the heating device according to an example.
- Figures 2: shows a detail of the heating device and cap element according to an example.
- Figures 3A-C: show a schematic representation of the alignment of the cap element relative to the tank and casing according to an example.
- Figures 4: shows a detail of the heating device and cap element according to two different configurations.
- Figures 5A-B: show a perspective representation of the cap element with the centering mechanism according to an example.
- Figure 6: shows a detail of heating device and cap element according to another example.

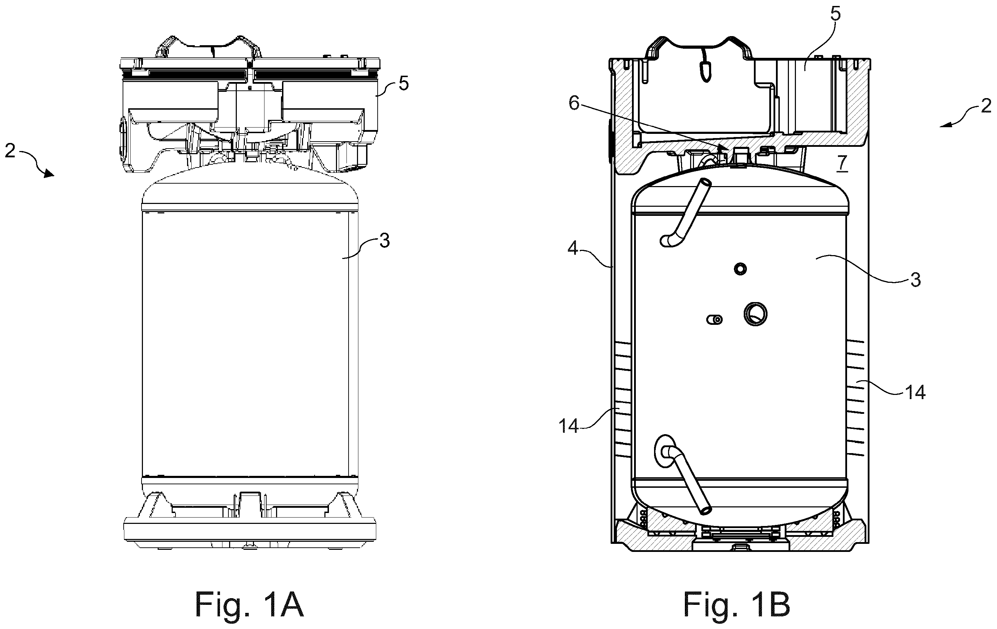

Figures 1A-1B illustrate a heating device system comprising a heating device 2. The heating device 2, in particular an insulated heat pump water heater, has a heat pump (not shown in the figure) located on the top of a casing 4 and a water tank 3 located inside the casing 4 below the heat pump. In particular, the heat pump is supported by a cap element 5 of the heating device system. The cap element 5 serves as top closing element of the casing 4. Figure 1B is a longitudinal cross section of figure 1A.

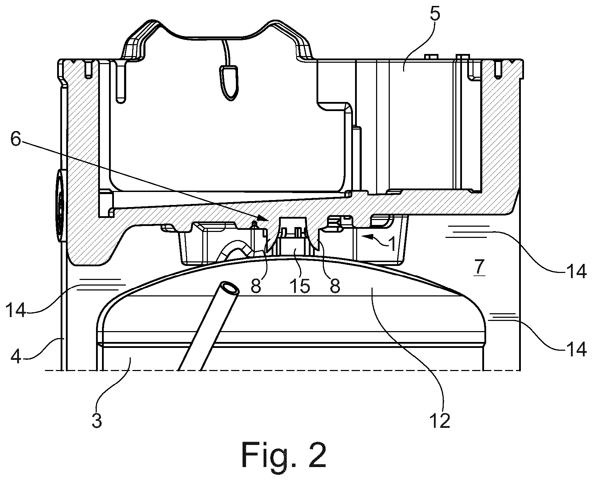

The insulated heat pump water heater 2 has a water tank 3 located in the casing assembly 4 and an insulating material 14 injected in the space 7 between the tank 3 and the casing 4. The casing assembly 4 consists of at least a top, a bottom and a periphery, the positions being at the time of the injection station of an insulating material (e.g. foam) 14. The upper part of the casing 4 is provided with a cap element 5 with a centering mechanism 1 (not shown in the figure). The cap element 5 (and the centering mechanism 1) is made of a flexible material, preferably an expanded plastic, preferably expanded polystyrene or expanded polypropylene. The insulating material (foam) is a thermal insulator, preferably polyurethane. The tank 3 can have a tube or pin or any other element on its upper portion 12 that is suitable to be coupled with the cap element 5, in particular with the centering mechanism 1. This is better clarified in figure 2.

Figure 2 illustrates a detail of figure 1B. In particular, figure 2 shows the upper region of the casing 4, where the cap element 5 is coupled to the upper portion 12 of the water tank 3 through the centering mechanism 1. The centering mechanism 1 comprises a deformable structure 6 made of a plurality of protruding portions 8. The deformable structure 6 is configured to surround and is housed around a tube 15 of the upper portion 12 of the tank 3. Accordingly, the deformable structure 6, and in particular each protruding portion 8, is capable of radial deformation when a mechanical pressure is exerted from top to bottom on this element, directly or indirectly. The mechanical pressure originates from the generation of the insulating material 14 in the space 7 between the tank 3 and the casing 4. It is noted that the centering mechanism can be integrated into an existing seat, such as a seat of the cap element 5, or it can be in a separate and dedicated seat.

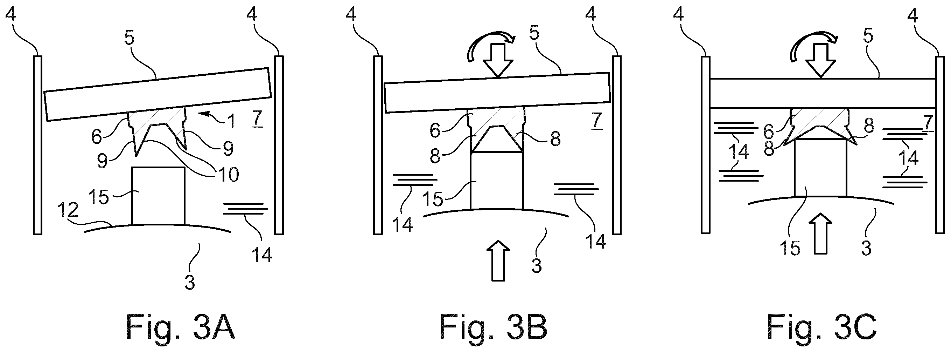

With reference to figures 3A-3C, the alignment of the cap element 5 relative to the water tank 3 and the casing 4 is illustrated. The cap element 5 is provided with a centering mechanism 1 on the surface facing the water tank 3, i.e., in the internal surface of the cap element 5. The centering mechanism 1 comprises a deformable structure 6 having a plurality of protruding portions 8, each having an external surface 9 and tapered internal edge surfaces 10. The cap element 5 is inserted in the casing 4 to close the casing from the top. The cap element 5 can advantageously be the support surface for one or more electromechanical devices, for example the components of a heat pump. Fluctuations in the tank 3 and casing 4 heights as well as a not homogeneous pressure exerted on the tank 3 or the internal parts of the casing 4 during the foaming process can determine lack of insulation, lifting of the tank 3 and a misalignment of the cap element 5 relative to the tank 3 and casing. Figures 3A-3C schematically describe the application of the centering mechanism 1 to avoid or reduce these problems, in particular the misalignment between the cap element 5 and the water tank 3 and also the management of height tolerance, mainly visible in Fig 3C.

It is noted that figures 3A-3C illustrate an exemplification of what concretely could happen during an injection process, these figures only showing a rotation of the cap element 5 and an upwards shift of the tank 3. As a matter of fact, during the injection, the water tank 3 can be subjected to other movements. For example, the tank 3 can be laterally shifted and can also rotate relative to the cap element 5 and the casing 4. The present centering mechanism 1 is configured to cope with all these issues.

In figure 3A, the cap element 5 is originally not aligned with the casing 4 and water tank 3. As mentioned above, this can be due to a different height between casing 4 and water tank 3 and to a not optimal pressure distribution exerted by the insulating material 14 on the tank 3, the casing 4 and the cap element 5. By increasing the quantity of the insulating material 14 in the space 7 between the tank 3 and the casing 4, the water tank 3 can be pushed upwards towards the cap element 5. In other words, during this injection process, the insulating material 14 exerts a mechanical stress in all directions inside the casing 4 and in particular upward. In response to this mechanical stress, a mechanical pressure can be exerted on the cap element 5 downward. This determines a coupling between a protruding element 15 on the upper portion 12 of the water tank 3, for example a tube, and the deformable structure 6 of the centering mechanism 1. In particular, the deformable protruding portions 8 touch the protruding element 15 of the water tank 3. Accordingly, the cap element 5 starts to shift and/or rotate. Since the centering mechanism 1 is located in the center portion 11 of the cap element and the protruding element 15 of the water tank 3 is located on a center region of the upper portion 12 of the tank 3 as well, the cap element 5 starts to align relative to the water tank 3 and the casing 4. By completely filling the space 7 with the insulating material 14 (figure 3C), the water tank 3 is further pushed upwards. It is noted that the deformable protruding portions 8 of the centering mechanism 1 are further deformed radially and the water tank 3 is completely aligned relative to the cap element 5 (and the casing 4). In this way, the water tank 3 is located inside the casing in the correct position relative to the casing 4 and relative to the cap element 5 after the foam injection process despite possible fluctuations in tank and casing height. Advantageously, is always possible to have the same heights between the bottom of the heating device 2 and the top of the cap element 5. Even if the dimensions of the tank 3 and the casing 4 are not fitting, it is possible to keep the same height of the product thanks to the management of the tolerance. Indeed, the mechanical pressure on the top of the cap element 5 is exerted until the optimal height of the product is reached, i.e. between bottom of the device 2 and the top of the cap element 5. By doing so, the product is at the optimal height and the customer is sure that it will fit into his installation.

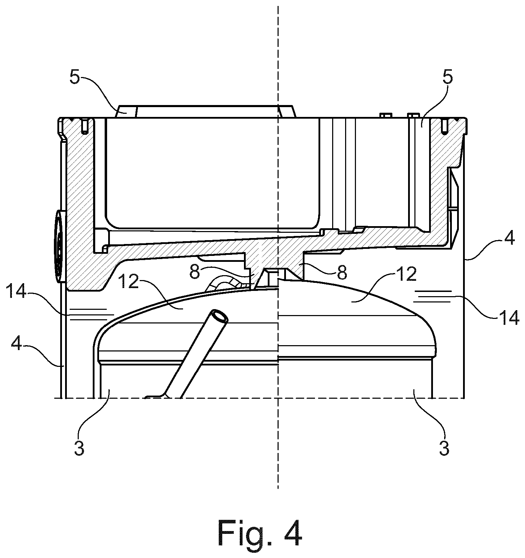

Figure 4 illustrates in detail the deformation of the centering mechanism 1 based on the height fluctuations of the water tank 3 and/or the casing 4. In particular, figure 4 compares two situations where the top of the cap element 5 is always at the same level. On the left side of the figure, the water tank 3 is smaller than nominal and/or the casing 4 is larger than nominal. In this case, there is a low deformation of the centering mechanism 1, and in particular of the protruding portions 8 of the deformable structure 6. On the right side of the figure, the water tank 3 is higher than nominal and/or the casing 4 is smaller than nominal. In this case, there is a high deformation of the centering mechanism 1, and in particular of the protruding portions 8 of the deformable structure 6.

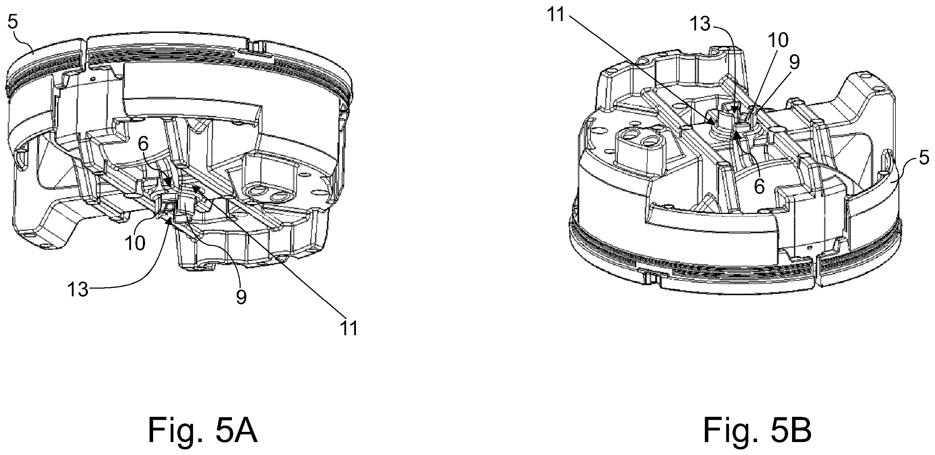

Figures 5A and 5B illustrate a perspective view of the cap element 5. As shown in the figures, the centering mechanism 1 is provided on the central portion 11 of the cap 5 and in particular on a side of the cap element 5 facing the water tank 3 when inserted in the casing 4. The centering mechanism 1 has a circular shape formed by a plurality of protruding portions 8 arranged along a circular outline to create a central recess 13. Between a protruding portion 8 and the neighboring surface 8, there is a space to allow an independent movement of each single protruding portion 8. Each protruding portion 8 has an external surface 9 and tapered internal edge surfaces 10. This particular configuration of the deformable structure 6 allows the centering mechanism 1 to surround a tube or pin 15 of the water tank 3 and determining the centering of the cap element 5 relative to the tank 3 through the deformation action of the protruding portions 8 as described above. In particular, the deformable structure 6 has a cylindrical cross-section suitable for receiving a cylindrical protruding element 15 of the water tank, such as a tube or a pin. In order to properly function as centering device, the cross sectional area of the deformable structure 6 needs to be almost equal to (or at least not extremely larger than) the dimensions of the protruding element 15 of the water tank 3 that is received in the recess 13.

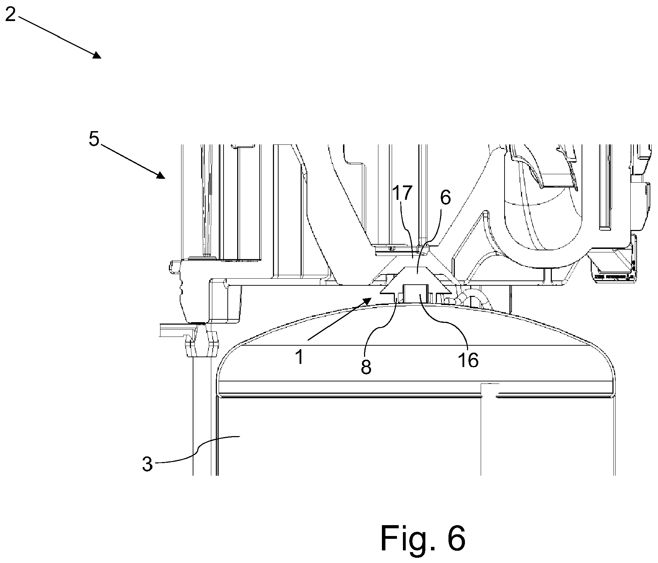

Figure 6 shows a detail of heating device 2 and cap element 1 according to another example. The embodiment differs from the embodiments discussed above in that the water tank 3 comprises the centering mechanism 1. A centering part 16 extends from the water tank 3 along a length direction of the water tank 3. The centering part 16 is welded to a water tank wall.

The centering mechanism 1 is mounted on the centering part 16. The centering mechanism 1 comprises a deformable structure 6. Additionally, the centering mechanism 1 comprises protruding portions 8 that are arranged distant to each other along a circumference direction of the centering mechanism 1. The protruding portions 8 are at one end in contact with the water tank wall.

The cap element 5 comprises a recess 17. The cap element 5 is arranged such, in particular the recess 17 is arranged such at the cap element 5, that the centering mechanism 1 enters into the recess 17 during the manufacturing process. The technical function of the protruding portions 8 is the same as for the embodiment discussed above so that it is referred to said explanations.

### Reference Signs

- 1: Centering mechanism
- 2: Heating device
- 3: Water tank
- 4: Casing
- 5: Cap element
- 6: Deformable structure
- 7: Space
- 8: Protruding portion
- 9: External surface
- 10: Tapered internal edge surface
- 11: Central portion of the cap
- 12: Upper portion of the tank
- 13: Recess
- 14: Insulating material
- 15: Tube
- 16: Centering part
- 17: Recess

## Claims

1. Cap element (5) for a heating device (2), the heating device (2) including a water tank (3) located in a casing (4), wherein the cap element (5) is placeable on or in the casing (4) for closing said casing (4), the cap element (5) comprising:
a centering mechanism integrated in or removable from the cap element (5), the centering mechanism having a deformable structure (6) for causing the cap element (5) to be centered relative to the water tank (3) upon exerting a mechanical pressure on said deformable structure (6) **characterized in that** the deformable structure (6) is located at a central portion (11) of the cap element (5).

2. Cap element (5) according to any one of claim 1, **characterized in that**:
a. the deformable structure (6) is arranged in a cavity of the cap element (5); and/or
b. the deformable structure (6) is attachable to the cap element (5).

3. Cap element (5) according to any one of claims 1 to 2, **characterized in that** the deformable structure (6) comprises a plurality of protruding portions (8) moving away from each other when subjected to the mechanical pressure.

4. Cap element (5) according to claim 3, **characterized in that**
a. the protruding portions (8) are arranged equidistant from each other; and/or
b. the protruding portions (8) have each an external surface (9) and tapered internal edge surfaces (10).

5. Cap element (5) according to any one of claims 1 to 4, **characterized in that** the deformable structure (6) is made of expanded plastic, in particular expanded polystyrene or expanded polypropylene.

6. Cap element (5) according to any one of claims 1 to 5, **characterized in that**
a. the deformable structure (6) is radially deformable in response to the mechanical pressure; or
b the deformable structure (6) is laterally deformable in response to the mechanical pressure; or
c the deformable structure (6) is deformable in compression in response to the mechanical pressure.

7. Cap element (5) according to any one of claims 1 to 6, **characterized in that** the deformable structure (6) comprises at least a recess (13).

8. Cap element (5) according to any one of claims 1 to 7, **characterized in that**
a. the deformable structure (6) has a circular cross-section; or
b. the deformable structure (6) has a polygonal cross-section, or
c. the deformable structure (6) has a truncated conical cross-section shape and is arranged to fit into a further recess (17) in the cap element, which further recess (17) has a truncated conical cross-section shape.

9. Heating device system comprising:
a heating device (2), in particular a heat pump water heater; and
a cap element (5) according to any one of claims 1 to 11,
wherein the heating device (2) comprises a casing (4) and a water tank (3) located in the casing (4), and wherein the cap element (5) is placeable on or in the casing (4) and closing said casing (4), the cap element (5) being in particular a support for a heat pump,
wherein the cap element (5) comprises a centering mechanism (1) integrated in, or removable from, the cap element, the centering mechanism (1) having a deformable structure (6) for causing the cap element (5) to be centered relative to the water tank (3) upon exerting a mechanical pressure on said deformable structure (6) and **characterized in that** the deformable structure (6) is located at a central portion (11) of the cap element (5).

10. Heating device system according to claim 9, **characterized in that**
a. the deformable structure (6) is configured to be in contact with an upper portion (12) of the water tank (3); and/or
b. the deformable structure (6) is configured to surround a protruding element (13) of the water tank (3), in particular a tube or a pin; and/or
c. the deformable structure (6) is deformable on the water tank's (3) side or is deformable on an opposite side to the water tank's (3) side.

11. Heating system according to claim 9, **characterized in that** the heating device (2) further comprises an insulating material (14) arranged in a space (7) between the water tank (3) and the casing (4), the insulating material (14) causing a direct or indirect mechanical stress on the deformable structure (6).

12. Heating system according to any one of claims 9 to 11, **characterized in that**:
a. the mechanical pressure is exerted on the cap element (5) in response to the generation of an insulating material (14) produced in a space (7) between the water tank (3) and the casing (4); and/or
b. the mechanical pressure is exerted on the cap element (5) on the opposite direction to a mechanical stress exerted on the cap element (5) by the insulating material (14); and/or
c. the mechanical pressure exerted on the cap element (5) is greater than a mechanical stress exerted on the cap element (5) by the insulating material (14).

13. Use of the cap element (5) according to one of clams 1 to 8 with a heating device (2), in particular a heat pump water heater.

14. Heating device system comprising:
a heating device (2), in particular a heat pump water heater, wherein the heating device (2) comprises a casing (4) and a water tank (3) located in the casing (4), and
a cap element (5) that is placeable on or in the casing (4) and closing said casing (4), the cap element (5) being in particular a support for a heat pump,
and
wherein the water tank (3) comprises a centering mechanism (1) which has a deformable structure (6) for causing the cap element (5) to be centered relative to the water tank (3) upon exerting a mechanical pressure on said deformable structure (6) and **characterized in that** the deformable structure (6) is located at a central portion (11) of the cap element (5).

15. Heating device system according to claim 14, **characterized in that**
a. the water tank (3) comprises a centering part (16), wherein the centering mechanism is mounted on the centering part and/or **in that**
b. the cap element (5) comprises a recess (17) for receiving the centering mechanism (1)

## Patentansprüche

1. Kappenelement (5) für eine Heizvorrichtung (2), wobei die Heizvorrichtung (2) einen Wassertank (3) einschließt, der sich in einem Gehäuse (4) angeordnet ist, wobei das Kappenelement (5) auf oder in dem Gehäuse (4) platzierbar ist, um das Gehäuse (4) zu verschließen, wobei das Kappenelement (5) umfasst:
einen Zentriermechanismus, der in das Kappenelement (5) integriert oder von diesem abnehmbar ist, wobei der Zentriermechanismus eine verformbare Struktur (6) aufweist, um zu bewirken, dass das Kappenelement (5) relativ zu dem Wassertank (3) zentriert wird, wenn ein mechanischer Druck auf die verformbare Struktur (6) ausgeübt wird, **dadurch gekennzeichnet, dass** die verformbare Struktur (6) an einer zentralen Stelle (11) des Kappenelements (5) angeordnet ist.

2. Kappenelement (5) nach einem der Ansprüche 1, **dadurch gekennzeichnet, dass**:
a. die verformbare Struktur (6) in einem Hohlraum des Kappenelements (5) angeordnet ist; und/oder
b. die verformbare Struktur (6) an dem Kappenelement (5) befestigbar ist.

3. Kappenelement (5) nach einem der Ansprüche 1 bis 2, **dadurch gekennzeichnet, dass** die verformbare Struktur (6) eine Vielzahl von vorspringenden Abschnitten (8) umfasst, die sich voneinander wegbewegen, wenn sie dem mechanischen Druck ausgesetzt sind.

4. Kappenelement (5) nach Anspruch 3, **dadurch gekennzeichnet, dass**
a. die vorstehenden Abschnitte (8) in gleichem Abstand zueinander angeordnet sind; und/oder
b. die vorstehenden Abschnitte (8) jeweils eine Außenfläche (9) und sich verjüngende Innenrandflächen (10) aufweisen.

5. Kappenelement (5) nach einem der Ansprüche 1 bis 4, **dadurch gekennzeichnet, dass** die verformbare Struktur (6) aus expandiertem Kunststoff, insbesondere aus expandiertem Polystyrol oder expandiertem Polypropylen, besteht.

6. Kappenelement (5) nach einem der Ansprüche 1 bis 5, **dadurch gekennzeichnet, dass**
a. die verformbare Struktur (6) in Reaktion auf den mechanischen Druck radial verformbar ist; oder
b. die verformbare Struktur (6) als Reaktion auf den mechanischen Druck seitlich verformbar ist; oder
c. die verformbare Struktur (6) als Reaktion auf den mechanischen Druck unter Druck verformbar ist.

7. Kappenelement (5) nach einem der Ansprüche 1 bis 6, **dadurch gekennzeichnet, dass** die verformbare Struktur (6) mindestens eine Aussparung (13) umfasst.

8. Kappenelement (5) nach einem der Ansprüche 1 bis 7, **dadurch gekennzeichnet, dass**
a. die verformbare Struktur (6) einen kreisförmigen Querschnitt aufweist; oder
b. die verformbare Struktur (6) einen polygonalen Querschnitt aufweist, oder
c. die verformbare Struktur (6) eine kegelstumpfförmige Querschnittsform aufweist und angeordnet ist, um in eine weitere Aussparung (17) in dem Kappenelement zu passen, wobei die weitere Aussparung (17) eine kegelstumpfförmige Querschnittsform aufweist.

9. Heizvorrichtungssystem, umfassend:
eine Heizvorrichtung (2), insbesondere einen Warmwasserbereiter mit Wärmepumpe; und
ein Kappenelement (5) nach einem der Ansprüche 1 bis 11,
wobei die Heizvorrichtung (2) ein Gehäuse (4) und einen in dem Gehäuse (4) angeordneten Wassertank (3) umfasst, und wobei das Kappenelement (5) auf oder in dem Gehäuse (4) platzierbar ist und das Gehäuse (4) verschließt, wobei das Kappenelement (5) insbesondere ein Träger für eine Wärmepumpe ist,
wobei das Kappenelement (5) einen Zentriermechanismus (1) umfasst, der in das Kappenelement integriert oder von diesem abnehmbar ist, wobei der Zentriermechanismus (1) eine verformbare Struktur (6) aufweist, um zu bewirken, dass das Kappenelement (5) relativ zum Wassertank (3) zentriert wird, wenn ein mechanischer Druck auf die verformbare Struktur (6) ausgeübt wird, **dadurch gekennzeichnet, dass** die verformbare Struktur (6) an einer zentralen Stelle (11) des Kappenelements (5) angeordnet ist.

10. Heizvorrichtungssystem nach Anspruch 9, **dadurch gekennzeichnet, dass**
a. die verformbare Struktur (6) konfiguriert ist, um mit einem oberen Abschnitt (12) des Wassertanks (3) in Berührung zu sein; und/oder
b. die verformbare Struktur (6) konfiguriert ist, um ein vorstehendes Element (13) des Wassertanks (3), insbesondere ein Rohr oder einen Stift, zu umgeben; und/oder
c. die verformbare Struktur (6) auf der Seite des Wassertanks (3) verformbar ist oder auf einer der Seite des Wassertanks (3) gegenüberliegenden Seite verformbar ist.

11. Heizsystem nach Anspruch 9, **dadurch gekennzeichnet, dass** die Heizvorrichtung (2) weiter ein isolierendes Material (14) umfasst, das in einem Raum (7) zwischen dem Wassertank (3) und dem Gehäuse (4) angeordnet ist, wobei das isolierende Material (14) eine direkte oder indirekte mechanische Belastung auf die verformbare Struktur (6) ausübt.

12. Heizsystem nach einem der Ansprüche 9 bis 11, **dadurch gekennzeichnet, dass**:
a. der mechanische Druck auf das Kappenelement (5) in Reaktion auf die Erzeugung eines isolierenden Materials (14) ausgeübt wird, das in einem Raum (7) zwischen dem Wassertank (3) und dem Gehäuse (4) erzeugt wird; und/oder
b. der mechanische Druck auf das Kappenelement (5) in der entgegengesetzten Richtung zu einer mechanischen Belastung ausgeübt wird, die durch das isolierende Material (14) auf das Kappenelement (5) ausgeübt wird; und/oder
c. der mechanische Druck, der auf das Kappenelement (5) ausgeübt wird, größer ist als eine mechanische Belastung, die durch das isolierende Material (14) auf das Kappenelement (5) ausgeübt wird.

13. Verwendung des Kappenelements (5) gemäß einer der Ansprüche 1 bis 8 mit einer Heizvorrichtung (2), insbesondere einem Warmwasserbereiter mit Wärmepumpe.

14. Heizvorrichtungssystem, umfassend:
eine Heizvorrichtung (2), insbesondere einen Warmwasserbereiter mit Wärmepumpe, wobei die Heizvorrichtung (2) ein Gehäuse (4) und einen in dem Gehäuse (4) angeordneten Wassertank (3) umfasst, und
ein Kappenelement (5), das auf oder in dem Gehäuse (4) platzierbar ist und das Gehäuse (4) verschließt, wobei das Kappenelement (5) insbesondere ein Träger für eine Wärmepumpe ist,
und
wobei der Wassertank (3) einen Zentriermechanismus (1) umfasst, der eine verformbare Struktur (6) aufweist, um zu bewirken, dass das Kappenelement (5) relativ zum Wassertank (3) zentriert wird, wenn ein mechanischer Druck auf die verformbare Struktur (6) ausgeübt wird, **dadurch gekennzeichnet, dass** die verformbare Struktur (6) an einer zentralen Stelle (11) des Kappenelements (5) angeordnet ist.

15. Heizvorrichtungssystem nach Anspruch 14, **dadurch gekennzeichnet, dass**
a. der Wassertank (3) einen Zentrierteil (16) umfasst, wobei der Zentriermechanismus an dem Zentrierteil montiert ist und/oder dadurch, dass
b. das Kappenelement (5) eine Aussparung (17) zur Aufnahme des Zentriermechanismus (1) umfasst.

## Revendications

1. Élément de capuchon (5) pour un dispositif de chauffage (2), le dispositif de chauffage (2) comportant un réservoir d'eau (3) situé dans un boîtier (4), dans lequel l'élément de capuchon (5) peut être placé sur ou dans le boîtier (4) pour fermer ledit boîtier (4), l'élément de capuchon (5) comprenant :
un mécanisme de centrage intégré à l'élément de capuchon (5) ou amovible par rapport à celui-ci, le mécanisme de centrage ayant une structure déformable (6) pour amener l'élément de capuchon (5) à être centré par rapport au réservoir d'eau (3) lorsque l'on exerce une pression mécanique sur ladite structure déformable (6), **caractérisé en ce que** la structure déformable (6) est située au niveau d'une partie centrale (11) de l'élément de capuchon (5).

2. Élément de capuchon (5) selon l'une quelconque de la revendication 1, **caractérisé en ce que** :
a. la structure déformable (6) est agencée dans une cavité de l'élément de capuchon (5) ; et/ou
b. la structure déformable (6) peut être fixée à l'élément de capuchon (5).

3. Élément de capuchon (5) selon l'une quelconque des revendications 1 à 2, **caractérisé en ce que** la structure déformable (6) comprend une pluralité de parties saillantes (8) s'éloignant les unes des autres lorsqu'elles sont soumises à la pression mécanique.

4. Élément de capuchon (5) selon la revendication 3, **caractérisé en ce que**
a. les parties saillantes (8) sont agencées à égale distance les unes des autres ; et/ou
b. les parties saillantes (8) ont chacune une surface externe (9) et des surfaces de bord internes (10) coniques.

5. Élément de capuchon (5) selon l'une quelconque des revendications 1 à 4, **caractérisé en ce que** la structure déformable (6) est faite de plastique expansé, en particulier de polystyrène expansé ou de polypropylène expansé.

6. Élément de capuchon (5) selon l'une quelconque des revendications 1 à 5, **caractérisé en ce que**
a. la structure déformable (6) est déformable radialement en réponse à la pression mécanique ; ou
b. la structure déformable (6) est déformable latéralement en réponse à la pression mécanique ; ou
c. la structure déformable (6) est déformable en compression en réponse à la pression mécanique.

7. Élément de capuchon (5) selon l'une quelconque des revendications 1 à 6, **caractérisé en ce que** la structure déformable (6) comprend au moins un évidement (13).

8. Élément de capuchon (5) selon l'une quelconque des revendications 1 à 7, **caractérisé en ce que**
a. la structure déformable (6) a une section transversale circulaire ; ou
b. la structure déformable (6) a une section transversale polygonale, ou
c. la structure déformable (6) a une forme de section transversale conique tronquée et est agencée pour s'adapter dans un évidement supplémentaire (17) de l'élément de capuchon, lequel évidement supplémentaire (17) a une forme de section transversale conique tronquée.

9. Système de dispositif de chauffage comprenant :
un dispositif de chauffage (2), en particulier un chauffe-eau à pompe à chaleur ; et
un élément de capuchon (5) selon l'une quelconque des revendications 1 à 11,
dans lequel le dispositif de chauffage (2) comprend un boîtier (4) et un réservoir d'eau (3) situé dans le boîtier (4), et dans lequel l'élément de capuchon (5) peut être placé sur ou dans le boîtier (4) et fermant ledit boîtier (4), l'élément de capuchon (5) étant en particulier un support pour une pompe à chaleur,
dans lequel l'élément de capuchon (5) comprend un mécanisme de centrage (1) intégré dans l'élément de capuchon ou amovible par rapport à celui-ci, le mécanisme de centrage (1) ayant une structure déformable (6) pour amener l'élément de capuchon (5) à être centré par rapport au réservoir d'eau (3) lorsque l'on exerce une pression mécanique sur ladite structure déformable (6) et **caractérisé en ce que** la structure déformable (6) est située au niveau d'une partie centrale (11) de l'élément de capuchon (5).

10. Système de dispositif de chauffage selon la revendication 9, **caractérisé en ce que**
a. la structure déformable (6) est conçue pour être en contact avec une partie supérieure (12) du réservoir d'eau (3) ; et/ou
b. la structure déformable (6) est conçue pour entourer un élément saillant (13) du réservoir d'eau (3), en particulier un tube ou une goupille ; et/ou
c. la structure déformable (6) est déformable sur le côté du réservoir d'eau (3) ou est déformable sur un côté opposé au côté du réservoir d'eau (3).

11. Système de chauffage selon la revendication 9, **caractérisé en ce que** le dispositif de chauffage (2) comprend en outre un matériau isolant (14) agencé dans un espace (7) entre le réservoir d'eau (3) et le boîtier (4), le matériau isolant (14) provoquant une contrainte mécanique directe ou indirecte sur la structure déformable (6).

12. Système de chauffage selon l'une quelconque des revendications 9 à 11, **caractérisé en ce que** :
a. la pression mécanique est exercée sur l'élément de capuchon (5) en réponse à la génération d'un matériau isolant (14) produit dans un espace (7) entre le réservoir d'eau (3) et le boîtier (4) ; et/ou
b. la pression mécanique est exercée sur l'élément de capuchon (5) dans la direction opposée à une contrainte mécanique exercée sur l'élément de capuchon (5) par le matériau isolant (14) ; et/ou
c. la pression mécanique exercée sur l'élément de capuchon (5) est supérieure à une contrainte mécanique exercée sur l'élément de capuchon (5) par le matériau isolant (14).

13. Utilisation de l'élément de capuchon (5) selon l'une des revendications 1 à 8 avec un dispositif de chauffage (2), en particulier un chauffe-eau à pompe à chaleur.

14. Système de dispositif de chauffage comprenant :
un dispositif de chauffage (2), en particulier un chauffe-eau à pompe à chaleur, dans lequel le dispositif de chauffage (2) comprend un boîtier (4) et un réservoir d'eau (3) situé dans le boîtier (4), et
un élément de capuchon (5) qui peut être placé sur ou dans le boîtier (4) et fermant ledit boîtier (4), l'élément de capuchon (5) étant en particulier un support pour une pompe à chaleur, et
dans lequel le réservoir d'eau (3) comprend un mécanisme de centrage (1) qui a une structure déformable (6) pour amener l'élément de capuchon (5) à être centré par rapport au réservoir d'eau (3) lorsque l'on exerce une pression mécanique sur ladite structure déformable (6) et **caractérisé en ce que** la structure déformable (6) est située au niveau d'une partie centrale (11) de l'élément de capuchon (5).

15. Système de dispositif de chauffage selon la revendication 14, **caractérisé en ce que**
a. le réservoir d'eau (3) comprend une partie de centrage (16), dans lequel le mécanisme de centrage est monté sur la partie de centrage et/ou **en ce que**
b. l'élément de capuchon (5) comprend un évidement (17) destiné à recevoir le mécanisme de centrage (1)
